# EUROPÄISCHE PATENTANMELDUNG

(11) **EP 1 503 393 A2**
(43) Veröffentlichungstag der Anmeldung: **02.02.2005**
(21) Anmeldenummer: 04017705.7
(22) Anmeldetag: 27.07.2004
(51) Int. Cl.: H01H 27/00

(54) **Schalter**

(30) Priorität: 31.07.2003 DE 10334965
(71) Anmelder: Leopold Kostal GmbH & Co. KG, 58507 Lüdenscheid (DE)
(72) Erfinder: Riehle, Jürgen, 44388 Dortmund (DE); Braeker, Tobias, 58313 Herdecke (DE); Mans, Björn, 44309 Dortmund (DE); Abel, Thomas, Dr., 58515 Lüdenscheid (DE)
(74) Vertreter: Kerkmann, Detlef, Dr.

(57) **Zusammenfassung**

Ein Schalter umfasst ein translatorisch gegen die Kraft eines oder mehrerer Rückstellelemente 19 in unterschiedliche Schaltstellungen 25 bewegbares Schaltelement 2 mit einem in eine Schaltkulisse 14 eingreifenden und in der Schaltkulisse 14 seitlich geführten Stellelement 11, wobei dem Stellelement 11 ein quer zur Ebene der Schaltkulisse 14 bewegbares Führungselement 20 zugeordnet ist, das sich mit seinem freien Ende, unter Vorspannung stehend, an der Sohle 16 der Schaltkulisse 14 abstützt und wobei die Schaltkulisse 14 ein oder mehrere Stufen 17, 18 im Bereich ihrer Sohle 16 aufweist.

## Beschreibung

Die Erfindung betrifft einen Schalter mit einem translatorisch gegen die Kraft eines oder mehrerer Rückstellelemente in unterschiedliche Schaltstellungen bewegbaren Schaltelement.

Derartige Schalter werden beispielsweise als Zündanlassschalter für Kraftfahrzeuge eingesetzt. Derartige Schalter umfassen in aller Regel ein Fach zum Aufnehmen eines Betätigungselementes, beispielsweise eines Schlüssels zum Bedienen des Schalters. Das Fach zum Aufnehmen des Betätigungselementes kann translatorisch bewegbar sein, wobei der Schlüssel als Betätigungshandhabe dient. Bei vorbekannten Schaltern dieser Art ist das Fach aus einer Null-Stellung in eine EIN-Stellung bewegbar. Somit lassen sich mit einem solchen Schalter zwei Schaltpositionen realisieren ― eine Null-Stellung und eine EIN-Stellung. Aus diesem Grunde werden derartige Schalter im Rahmen elektronischer Zündanlassschalter eingesetzt. Üblicherweise erfolgt eine Ansteuerung des Anlassers mit einem weiteren Schalter, beispielsweise einem Taster. Die Übernahme der Schaltstellungen von herkömmlichen Zündanlassschaltern, die durch Einstecken eines Schlüssels in eine Schlüsselaufnahme und durch Drehen des Schlüssels in unterschiedliche Schaltpositionen gebracht werden, ist auf solche Schalter, die translatorisch bewegt werden, nicht realisiert worden.

Der Erfindung liegt daher die Aufgabe zugrunde, einen Schalter, beispielsweise als Zündanlassschalter für ein Kraftfahrzeug ausgebildet, zu konzipieren, der ein Fach zur Aufnahme eines Betätigungselementes, beispielsweise eines Schlüssels aufweist und ebenso wie herkömmliche Zündanlassschalter in mehrere, insbesondere hintereinanderliegende Schaltstellungen bringbar ist.

Diese Aufgabe wird erfindungsgemäß durch einen Schalter umfassend ein translatorisch gegen die Kraft eines oder mehrerer Rückstellelemente in unterschiedliche Schaltstellungen bewegbares Schaltelement mit einem in eine Schaltkulisse eingreifenden und in der Schaltkulisse seitlich geführten Stellelement gelöst, bei dem dem Stellelement ein quer zur Ebene der Schaltkulisse bewegbares Führungselement zugeordnet ist, das sich mit seinem freien Ende, unter Vorspannung stehend, an der Sohle der Schaltkulisse abstützt und wobei die Schaltkulisse ein oder mehrere Stufen im Bereich ihrer Sohle aufweist.

Dieser Schalter verfügt über ein Stellelement, das seitlich geführt in eine Stellkulisse eingreift. Dem Stellelement ist ferner ein Führungselement zugeordnet, das sich unter Vorspannung stehend an der Sohle der Schaltkulisse abstützt. Durch ein solches, in eine Schaltkulisse eingreifendes Stellelement können nicht nur durch die Seitenwände einer solchen Schaltkulisse Schaltstellungen definiert werden, sondern auch durch entsprechende Konturierung der Sohle der Schaltkulisse. Bei dieser Schaltkulisse handelt es sich somit um eine dreidimensionale Schaltkulisse. Über die Sohle der Schaltkulisse sind etwa Schaltstellungen durch Ausbilden von Stufen realisierbar, über die beim Einschieben des Faches das Führungselement unter Vorspannung stehend und sich an der Sohle der Schaltkulisse abstützend geführt wird und an dem sich dieses Führungselement infolge der auf das Fach wirkenden Rückstellkraft eines oder mehrerer Rückstellelemente als Anschlag anliegt. Kombiniert werden kann eine solche Schaltposition gleichfalls durch ein an einer oder beiden Seitenwänden zugeordnetes Kulissenelement. Auf diese Weise können zur Ausbildung bestimmter Schaltstellungen herkömmliche Herzkurven um solche, wie oben beschrieben, erweitert werden. Mit einem solchen Schalter können somit ohne weiteres die für einen Zündanlassschalter gewünschten Schaltstellungen realisiert werden. Insbesondere kann bei einer solchen Schaltkulisse durch Ausbilden einer Stufe in der Sohle der Schaltkulisse eine Schaltstellung definiert werden, die zwischen einer stabilen Lagerung des Stellelementes in der Fahrt-Stellung des Zündanlassschalters und in einer ersten Betätigungsstellung angeordnet ist. Diese Zwischenschaltstellung kann als Stellung "Zündung an" ausgebildet sein.

Das dem Stellelement zugeordnete Führungselement ist zweckmäßigerweise ein Führungsbolzen, der in einer hülsenartigen Aufnahme des Stellelementes etwa eines Stellhebels angeordnet ist. Zweckmäßigerweise dient der Führungsbolzen gleichzeitig zum Abtasten der seitlichen Führungen der Schaltkulisse. Das Stellelement wird in aller Regel schwenkbar an dem translatorisch bewegten Fach angeordnet sein, wobei durch Einsatz einer Feder die Null-Stellung des Stellhebels definiert ist, und eine Führung des Stellelementes in der Schaltkulisse gegen die Rückstellkraft dieses Federelementes wirkt. Somit können durch die beschriebene Ausbildung von Stufen im Bereich der Sohle der Schaltkulisse auch Weichen ausgebildet werden, gegen die beim Einschieben des Faches das Führungselement anstößt und geleitet wird und über das das Führungselement bei seiner Rückbewegung herübergeführt wird. Somit lässt sich auch eine insgesamt nach Art einer Herzkurve ausgebildete Schaltkulisse bereitstellen, bei der die Schaltkulisse insgesamt einen gemeinsamen Anfangs- bzw. Endast aufweisen kann, der sowohl für die Hin- als auch für die Rückbewegung des Stellelementes genutzt werden kann.

Für den Fall, dass der Stellhebel schwenkbar am Fach angelenkt ist, kann diese Verschwenkbarkeit ausgenutzt werden, um das Fach zu verriegeln, bzw. das in einer Verriegelungsposition befindliche Stellelement durch Verschwenken des Stellhebels aus dieser herauszubringen, bevor das Fach translatorisch bewegt werden kann. Zu diesem Zweck verfügt das Stellelement beispielsweise über einen in das Fach hineinragenden Stellschenkel, gegen den der Schlüssel wirkt und durch den der Stellhebel aus seiner Verriegelungsposition herausgeschwenkt worden ist, wenn der Schlüssel bestimmungsgemäß in das Fach eingeschoben worden ist.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung eines Zündanlassschalters für ein Kraftfahrzeug,
- **Fig. 2:**: der Zündanlassschalter der Figur 1 in einer schematisierten Draufsicht mit seiner Schaltkulisse und
- **Fig. 3:**: eine perspektivische Rückansicht des Zündanlassschalters der Figur 1.

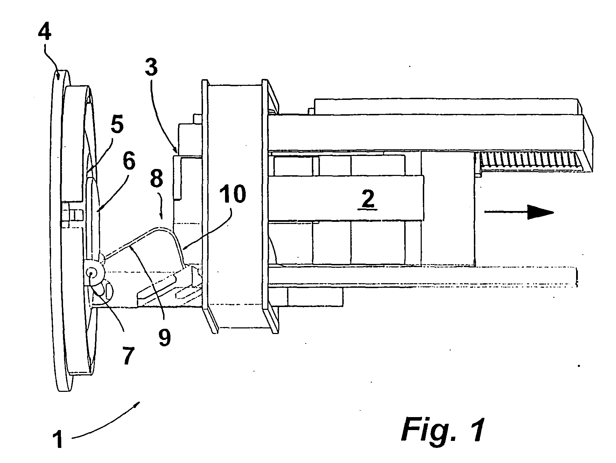

Ein als Zündanlassschalter 1 ausgebildeter elektrischer Schalter umfasst ein auf einen Schlitten 2 befindliches Fach 3 zum Aufnehmen eines als Betätigungselement dienenden Schlüssels. Der Übersicht halber ist der Schlüssel in Figur 1 nicht gezeigt. Der Schlitten 2 ist in der in Figur 1 gezeigten Pfeilrichtung translatorisch verschiebbar. In unterschiedlichen Stellungen des Schlittens 2 und somit auch seines Faches 3 werden unterschiedliche, in den Figuren nicht dargestellte Schalter kontaktiert, um unterschiedliche Aktoren anzusteuern bzw. Schaltzustände zu realisieren. Somit bildet der Schlitten 2 das Stellelement zum Betätigen der elektrischen Schalter bzw. Schalteinrichtungen. Der Schlitten 2 befindet sich mit seinem Fach 3 zur Aufnahme des Schlüssels hinter einer Blende 4, die ihrerseits beispielsweise in das Armaturenbrett eines Kraftfahrzeuges eingelassen ist. Somit ist der Schlitten 2 nicht ohne weiteres zugänglich. Betätigt wird der Schlitten 2 und somit der Zündanlassschalter 1 durch den als Betätigungselement dienenden Schlüssel. Dieser wird zu diesem Zweck durch eine Einstecköffnung 5 in der Blende 4 hindurchgeführt. Die Einstecköffnung 5 ist durch eine Klappe 6 verschlossen, wenn in das Fach 3 des Schlittens 2 kein Schlüssel eingesetzt ist. Diese Stellung der Klappe 6 ist in Figur 1 gezeigt. Die Klappe 6 ist schwenkbar rahmenseitig angelenkt. Die Schwenkachse der Klappe ist in Figur 1 mit dem Bezugszeichen 7 gekennzeichnet. Die Klappe 6 ist ortsfest gegenüber der translatorischen Bewegung des Schlittens 2 mit seinem Fach 3 angelenkt. Die Klappe 6 wird durch eine bistabile Feder 8 in ihrer in Figur 1 gezeigten Geschlossen-Stellung gehalten. Die Feder 8 stützt sich mit ihrem einen Schenkel 9 im Bereich einer Seitenfläche der Klappe 6 und mit ihrem anderen Schenkel 10 rahmenseitig ab.

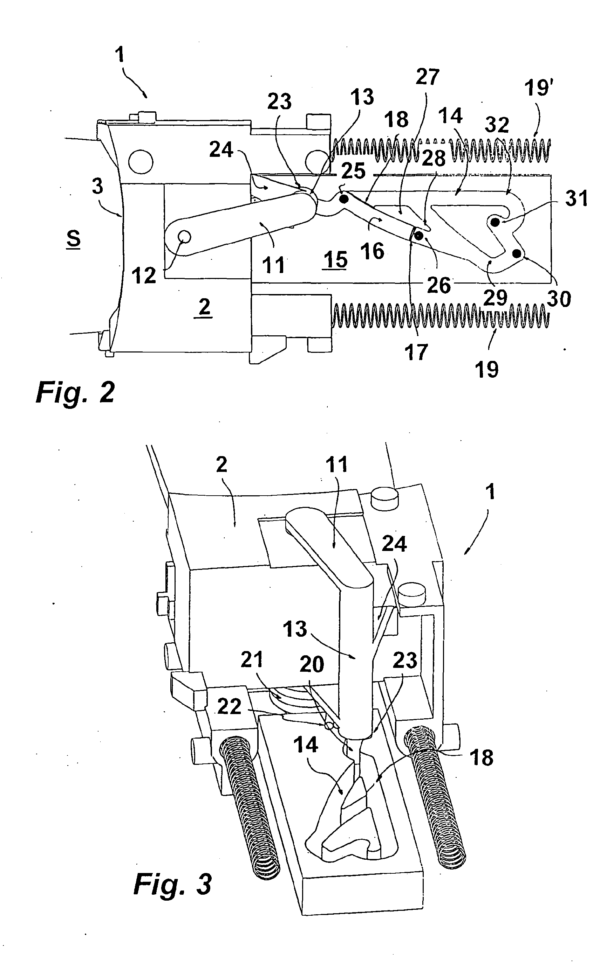

Mit seinem in Figur 1 nicht dargestellten rückwärtigen Abschluss ist an den Schlitten 2 ein als Stellelement dienender Stellhebel 11 schwenkbar angelenkt (vgl. Figur 2). Die Schwenkachse des Stellhebels 11 ist mit dem Bezugszeichen 12 gekennzeichnet und verläuft quer zur translatorischen Bewegungsrichtung des Schlittens 2. Der Stellhebel 11 verfügt über eine Hülse 13, in der unter Federvorspannung stehend ein Führungsbolzen angeordnet ist. Der Führungsbolzen greift mit seinem freien Ende in eine Schaltkulisse 14 ein. Die Schaltkulisse 14 hat, wie aus den nachfolgenden Figuren erkennbar, eine in einen Kulissenkörper 15 eingebrachte Nut. Die Schaltkulisse 14 bietet dem darin eingreifenden Führungsbolzen durch die Nutenwandungen seitliche Führungen. Überdies ist die Sohle 16 der Stellkulisse 14 durch Stufen charakterisiert, wobei bei dem in den Figuren dargestellten Ausführungsbeispiel zwei Stufen 17, 18 vorgesehen sind. Die Stufen 17, 18 wirken gegenüber dem Führungsbolzen als Anschläge bzw. Führungen. Der Schlitten 2 ist translatorisch gegen die Rückstellkraft von zwei Axialfedern 19, 19' bewegbar. Anstelle der in den Figuren gezeigten Axialfedern 19, 19' können auch andere Rückstellelemente eingesetzt werden, gegen deren Rückstellkraft der Schlitten 2 bewegbar ist.

Figur 3 zeigt den in die Schaltkulisse 14 eingreifenden Führungsbolzen 20. Der Führungsbolzen 20 ist in Querrichtung zur Ebene der Schaltkulisse 14 und somit parallel zur Schwenkachse 12 des Stellhebels 11 bewegbar in der Hülse 13 aufgenommen und stützt sich mit seinem freien Ende unter Federvorspannung stehend an der Sohle 16 der Schaltkulisse 14 ab. Auf den Stellhebel 11 wirkt eine Feder 21, die mit ihrem einen Schenkel 22 an dem Stellhebel 11 anliegt und diesen unter einer gegen den Uhrzeigersinn gerichtete Vorspannung hält. Somit ist der Stellhebel 11 bestrebt, mit seinem Führungsbolzen 20 an den jeweils rechten Seitenwänden der Figur 3 geführt zu werden.

Nochmals unter Bezug auf Figur 2 werden im folgenden die unterschiedlichen Schaltstellungen des Schlittens 2 erläutert. In der in Figur 2 gezeigten Stellung befindet sich innerhalb des Faches 3 des Schlittens 2 als Betätigungselement ein Schlüssel S. Mit dem Schlüssel S ist der Stellhebel 11 aus einer Verriegelungsstellung herausbewegt worden, die durch ein Sackloch 23 definiert ist. Greift der Führungsbolzen 20 in das Sackloch 23 ein, ist eine translatorische Bewegung des Schlittens 2 zum Erreichen der unterschiedlichen Schaltstellungen blockiert. Herausgebracht wird der Stellhebel 11 aus dieser Verriegelungsstellung, indem der Schlüssel S beim Einschieben in das Fach 3 auf einen Schenkel 24 des Stellhebels 11 wirkt und durch diese Maßnahme den Stellhebel 11 verschwenkt wird, so dass der Führungsbolzen 20 aus dem Sackloch 23 herausbewegt werden kann. Somit zeigt Figur 2 den Zündanlassschalter 1 in einer Stellung, in der der Schlüssel S bestimmungsgemäß in das Fach 3 des Schlittens 2 eingeschoben worden ist. Zum Betätigen des Schlittens 2, dient der Schlüssel S, der zu diesem Zweck vorderseitig aus der Einstecköffnung 5 herausragt. Der Schlüssel S wird zum Betätigen des Schlittens 2 eingeschoben, wodurch der Führungsbolzen 20 innerhalb der Schaltkulisse 14 bewegt wird. Eine erste Schaltstellung 25 ist durch die Stufe 18 gebildet, an der der Führungsbolzen 20 beim Verschieben des Schlittens 2 entsprechend der zu Figur 2 gezeigten Pfeilrichtung anschlägt. Diese erste Schaltstellung 25 ist eine Stellung, in der beispielsweise ein Radio eingeschaltet werden kann. Diese Schaltstellung 25 stellt die erste Betriebsstellung des Zündanlassschalters 1 dar. Bei weiterem Einschieben des Schlittens 2 wird der Führungsbolzen 20 entlang der Stufe 18 und der sich anschließenden Wand geführt, bis dieser aufgrund seiner sich an der Sohle 16 abstützenden Federvorspannung über die Stufe 17 geführt wird. Bei dem in Figur 2 gezeigten Ausführungsbeispiel ist diese Schaltstellung 26 nicht durch einen Anschlag haptisch kenntlich gemacht, sondern ein Benutzer spürt diese Stellung durch das Rasten des Führungsbolzens 20 entlang der Stufe 17 und sein Aufschlagen auf der Sohle des sich an die Stufe 17 anschließenden tieferen Abschnittes der Schaltkulisse 14. Diese zweite Schaltstellung 26 definiert die Stellung des Schlittens 2, in der die Zündung eingeschaltet wird.

Für den Fall, dass im Anschluss an die Schaltstellung 26 die Zündung wieder ausgeschaltet werden soll, wird durch Einschieben des Schlüssels S der Schlitten 2 geringfügig weiter eingeschoben, bis der Führungsbolzen um die durch die Kulisseninsel 27 bereitgestellte vordere Kante 28 herumgeführt ist. Infolge der auf den Stellhebel 11 wirkenden Federkraft der Feder 21 wird der Führungsbolzen 20 sodann gegen den Uhrzeigersinn nach links verschwenkt und befindet sich sodann auf seinem Rückweg in die erste Schaltstellung 25, da auf den Schlitten 2 die Rückstellkräfte der Axialfeder 19, 19' wirken. Für den Fall, dass ausgehend von einer Position des Führungsbolzens 20 in der Schaltstellung 26 der Motor gestartet werden soll, wird über dem Schlüssel S der Schlitten 2 weiter eingeschoben, bis der Führungsbolzen 20 in den Bereich eines Herzkurvenabschnittes 29 der Schaltkulisse 14 gelangt. Diejenige Schaltstellung, in der der Führungsbolzen 20 sich befindet, wenn der Anlasser betätigt wird, ist mit dem Bezugszeichen 30 in Figur 2 gekennzeichnet. Nach Loslassen des Schlüssels S wird durch die in den Axialfedern 19, 19' gespeicherte Rückstellkraft der Führungsbolzen 20 in die nächste stabile Schaltstellung 31 ― die Fahrt-Stellung ― geführt. Zum Ausschalten des Motors des Kraftfahrzeuges wird ausgehend von der Fahrt-Stellung erneut der Schlüssel S eingeschoben, so dass der in der Schaltstellung 31 befindliche Führungsbolzen 20 aus dieser Stellung herausbewegt und anschließend durch die Kraft der Feder 21 und die Axialfedern 19, 19' in den Rückführungsast 32 der Schaltkulisse 14 eingebracht wird und in die Schaltstellung 25 geführt wird. Befindet sich der Führungsbolzen 20 in der Schaltstellung 25 kann dieser aus dieser Schaltstellung 25 in die in Figur 2 gezeigte nur durch Ziehen des Schlüssels S und somit durch entgegengesetztes Bewegen des Schlittens 2 herausgebracht werden. Infolge der Vorspannung der Feder 21 wird der Führungsbolzen 20 bei einem aktiven Herausziehen des Schlüssels S aus dem Fach 3 des Schlittens 2 wieder in das Sackloch 23 eingebracht.

Für den Fall, dass die Zündstellung ebenfalls durch einen Anschlag haptisch kenntlich gemacht werden soll, kann auch in diesem, die Stufe 17 beinhaltenden Zweig der Schaltkulisse 14 ein herzkurvenförmiges Element angeordnet sein. Dieses ist ähnlich konzipiert, wie der Herzkurvenabschnitt 29.

Aus der Beschreibung der Erfindung wird deutlich, dass die beschriebene Kulissenführung in nicht unmaßgeblicher Weise herkömmliche Kulissenführungen ersetzen kann. Insbesondere können mit einer solchen Schaltkulisse zahlreiche Schaltpunkte definiert werden, auch ohne dass die Schaltkulisse selbst komplizierter aufgebaut werden müsste. Besonders zweckmäßig ist die Möglichkeit eines Einbaus von gestuften Führungen. Die beschriebene Kulissenführung kann durch eine weitere Kulissenführung erweitert werden, wenn beispielsweise mehrere Stellhebel zum Realisieren unterschiedlicher Haptiken gewünscht sind. Deutlich wird auch, dass sich die beschriebene Kulissenführung sich auch für rotatorisch betätigte Stellelemente eignet.

### Bezugszeichenliste

- 1: Zündanlassschalter
- 2: Schlitten
- 3: Fach
- 4: Blende
- 5: Einstecköffnung
- 6: Klappe
- 7: Schwenkachse
- 8: Feder
- 9: Schenkel
- 10: Schenkel
- 11: Stellhebel
- 12: Schwenkachse
- 13: Hülse
- 14: Schaltkulisse
- 15: Kulissenkörper
- 16: Sohle
- 17: Stufe
- 18: Stufe
- 19, 19': Axialfeder
- 20: Führungsbolzen
- 21: Feder
- 22: Schenkel
- 23: Sackloch
- 24: Schenkel
- 25: Schaltstelle
- 26: Schaltstelle
- 27: Kulisseninsel
- 28: Kante
- 29: Herzkurvenabschnitt
- 30: Schaltstellung
- 31: Schaltstellung
- 32: Rückführungsast
- S: Schlüssel

## Patentansprüche

1. Schalter umfassend ein translatorisch gegen die Kraft eines oder mehrerer Rückstellelemente (19, 19') in unterschiedliche Schaltstellungen (25, 26, 30, 31) bewegbares Schaltelement (2) mit einem in eine Schaltkulisse (14) eingreifenden und in der Schaltkulisse (14) seitlich geführten Stellelement (11), wobei dem Stellelement (11) ein quer zur Ebene der Schaltkulisse (14) bewegbares Führungselement (20) zugeordnet ist, das sich mit seinem freien Ende, unter Vorspannung stehend, an der Sohle (16) der Schaltkulisse (14) abstützt und wobei die Schaltkulisse (14) ein oder mehrere Stufen (17, 18) im Bereich ihrer Sohle (16) aufweist.

2. Schalter nach Anspruch 1, **dadurch gekennzeichnet, dass** eine Stufe (17) eine Schaltstellung definiert, indem diese einen Anschlag für das Führungselement (20) im Hinblick auf die durch das oder die Rückstellelemente (19, 19') bereitgestellte Rückstellkraft bildet.

3. Schalter nach Anspruch 1 oder 2. **dadurch gekennzeichnet, dass** eine Stufe (18) zum Zusammenführen eines Rückführungsastes (32) in einen gemeinsamen Anfangs- bzw. Endast der Schaltkulisse (14) dient.

4. Schalter nach einem der Ansprüche 1 bis 3, **dadurch gekennzeichnet, dass** das Führungselement einen Führungsbolzen (20) ist.

5. Schalter nach einem der Ansprüche 1 bis 3 **dadurch gekennzeichnet, dass** auf das Stellelement (11) die Kraft eines Federelementes (21) wirkt, um dieses unter Vorspannung stehend einseitig zu belasten.

6. Schalter nach Anspruch 5, **dadurch gekennzeichnet, dass** Teil der Schaltkulisse (14) ein Sackloch (23) ist, in das das Führungselement (20) in der Null-Stellung des Schlittens (2) eingreift.

7. Schalter nach Anspruch 6, **dadurch gekennzeichnet, dass** dem Stellelement (11) ein in das Fach (3) hineinragender Schenkel (24) zugeordnet ist, der durch die Stirnseite eines in das Fach eingelegten Betätigungselementes zum Verschwenken des Stellhebels (11) betätigbar ist.
